# FASCICULE DE BREVET EUROPEEN

(11) **EP 0 412 864 B1**
(45) Date de publication et mention de la délivrance du brevet: **15.09.1993**
(21) Numéro de dépôt: 90401970.0
(22) Date de dépôt: 06.07.1990
(51) Int. Cl.: F16F 3/08, B60G 7/02, F16F 1/36

(54) **Liaison élastique, notamment pour le montage d'un train roulant de véhicule automobile**
Elastische Verbindung, insbesondere für die Montage einer Kraftfahrzeugachse
Elastic connection, especially for the assembly of an axle of a motor vehicle

(30) Priorité: 08.08.1989 FR 8910676
(43) Date de publication de la demande: 13.02.1991
(73) Titulaire: AUTOMOBILES PEUGEOT, 75116 Paris (FR); AUTOMOBILES CITROEN, 92200 Neuilly-sur-Seine (FR)
(72) Inventeur: Robic, Pascal, F-35200 Rennes (FR); Le Fol, Marcel, F-35410 Domloup (FR)
(74) Mandataire: Moncheny, Michel

(56) Documents cités:
- EP-A- 0 317 727
- DE-A- 2 365 798
- FR-A- 2 031 658
- FR-A- 2 596 010
- US-A- 3 494 676
- PATENT ABSTRACTS OF JAPAN vol. 8, no. 32 (M-275)(1469) 10 février 1984, & JP-A-58 188719 (NISSAN) 04 novembre 1983,

## Description

La présente invention a pour objet une liaison élastique du type comportant un bloc en matériau élastomère auquel sont reliées deux armatures susceptibles de se déplacer l'une par rapport à l'autre.

Un tel type de liaison élastique est notamment utilisé pour le montage d'un train roulant, tel que l'essieu arrière d'un véhicule automobile, par rapport à la caisse de ce dernier.

Dans ce type de montage il est courant d'utiliser deux liaisons élastiques situées symétriquement de part et d'autre de l'axe longitudinal du véhicule automobile.

La liaison élastique ne doit pas posséder la même raideur élastique selon toutes les directions. Afin d'obtenir un bon filtrage des vibrations transmises par le train roulant à la caisse du véhicule, il est nécessaire que la liaison présente la raideur la plus faible possible dans le sens longitudinal. La raideur dans le sens vertical doit être compatible avec la charge de la caisse du véhicule que supporte la liaison.

Par contre la raideur la plus grande possible est nécessaire dans la direction transversale afin d'assurer le guidage transversal du train roulant par rapport à la caisse du véhicule.

Il a déjà été proposé dans le document FR-A-2.031.658 une liaison élastique possédant un rapport de raideur transversale sur raideur longitudinale qui soit augmenté. Cette liaison élastique et du type comportant un bloc en matériau élastomère auquel sont reliées deux armatures susceptibles de se déplacer l'une par rapport à l'autre, et du type dans laquelle chacune des deux armatures comporte une portion d'armature qui s'étend parallèlement à un plan commun, au moins un pavé de butée étant agencé entre ces deux portions d'armatures de manière à travailler en compression pour augmenter la raideur élastique de la liaison selon une direction de déplacement perpendiculaire audit plan commun, une face plane du pavé de butée coopérant par glissement avec une face plane de butée et de glissement agencée en vis-à-vis et parallèle audit plan commun.

Grâce à l'agencement d'un tel pavé de butée, ou de compression, une liaison élastique disposée par rapport à la caisse du véhicule de manière à ce que ladite direction de déplacement relatif entre les armatures soit la direction transversale du véhicule, permet d'accroître la raideur élastique de la liaison dans cette direction du fait de l'existence du pavé de butée qui est choisi dans un matériau dont la compressibilité est adaptée à la raideur que l'on désire obtenir pour la liaison selon cette direction.

Toutefois, cette conception n'est pas satisfaisante dans la mesure où le pavé unique ne permet pas d'assurer simultanément et dans de bonnes conditions ses fonctions d'accroissement de la raideur transversale et de glissement.

Afin de remédier à cet inconvénient, l'invention propose une liaison élastique de ce type, caractérisée en ce qu'elle comporte deux pavés de butée dont chacun est relié à l'une des deux portions d'armatures et comporte une face plane libre de glissement parallèle audit plan commun et qui coopère par glissement avec la face libre de glissement du second pavé.

Selon d'autres exemples d'execution de l'invention :
- chaque pavé de butée présente une forme sensiblement parallélépipédique rectangle dont l'une des faces rectangulaires de plus grandes dimensions constitue la face plane libre de glissement et dont la face rectangulaire opposée est reliée à la portion d'armature en vis-à-vis ;
- dans le cas où il est nécessaire de prévoir un agent lubrifiant facilitant les mouvements de glissement des pavés de butée, la liaison élastique comporte au moins une chambre étanche déformable agencée entre lesdites deux portions d'armatures et dans laquelle sont agencés les pavés de butée ;
- la chambre est délimitée par une paroi latérale tubulaire en matériau élastomère dont chacune des faces d'extrémités annulaires opposées est reliée de manière étanche à la face de la portion d'armature en vis-à-vis;
- la paroi tubulaire est une paroi sensiblement cylindrique dont la génératrice est parallèle à ladite direction de déplacement; la courbe directrice de la paroi latérale tubulaire peut être un rectangle ;
- la chambre peut également être délimitée par une paroi d'extrémité, venue de matière avec la paroi latérale, et adhérisée sur la face de la portion d'armature en vis-à-vis.

Ces caractéristiques permettent de réaliser très simplement la chambre étanche déformable, notamment par surmoulage de ses parois en matériau élastomère sur les portions d'armatures métalliques de la liaison, cette opération de surmoulage pouvant être effectuée simultanément avec l'opération de surmoulage du bloc en matériau élastomère auquel sont reliées les deux armatures.

Afin de permettre l'assemblage de la liaison, opération au cours de laquelle il faut éventuellement assurer un remplissage de la chambre étanche avec un agent lubrifiant, une des faces d'extrémité annulaires de la paroi latérale est adhérisée sur un cadre intermédiaire de liaison dont le contour correspond sensiblement à celui de ladite face d'extrémité annulaire et qui comporte des moyens de liaison étanche avec la portion d'armature en vis-à-vis.

Selon encore d'autres examples d'exécution de l'invention :
- les moyens de liaison étanche sont constitués par un bord périphérique du cadre intermédiaire serti autour de la portion d'armature ;
- les moyens de liaison étanche comportent également un bourrelet interne d'étanchéité, venu de matière avec la paroi latérale au voisinage de sa face d'extrémité annulaire, et qui coopère avec le bord interne du cadre intermédiaire et la face en vis-à-vis de la portion d'armature ; et
- la paroi latérale présente, en section par un plan parallèle à ladite direction, un profil en forme de soufflet pour faciliter les mouvements de glissement selon une direction parallèle au plan commun.

Les armatures peuvent être deux armatures planes opposées et parallèles qui sont séparées axialement par un bloc en matériau élastomère dont chacune des faces opposées est adhérisée à l'armature en vis-à-vis, les portions d'armatures étant repliées à 90° en direction de l'armature opposée.

Le guidage transversal d'un train roulant de véhicule automobile nécessite de disposer symétriquement et de manière opposée deux liaisons conformes aux enseignements de la présente invention.

Toutefois, afin d'améliorer encore le maintien transversal du train roulant, chacune des deux armatures peut comporter une autre portion d'armature qui s'étend parallèlement audit plan commun, au moins un autre pavé de butée étant agencé entre ces deux autres portions d'armatures de manière à travailler en compression pour augmenter la raideur élastique de la liaison selon une direction de déplacement perpendiculaire au plan commun.

La liaison peut comporter également une seconde chambre étanche déformable agencée entre les deux autres portions d'armatures et dans laquelle est agencé au moins ledit autre pavé de butée.

Selon une seconde variante les deux portions parallèles d'une des deux armatures s'étendent entre les deux portions parallèles de l'autre des deux armatures de manière à augmenter la rigidité de la liaison selon ladite direction de déplacement relatif, dans les deux sens de déplacement.

Enfin, selon une autre variante, les deux portions parallèles d'une des deux armatures peuvent être agencées de manière alternée par rapport aux deux portions parallèles de l'autre des deux armatures de manière à augmenter la rigidité de la liaison à deux pavés selon ladite direction de déplacement relatif dans un sens de déplacement.

Les avantages de l'invention apparaîtront à la lecture de la description détaillée qui va suivre pour la compréhension de laquelle on se reportera aux dessins annexés dans lesquels :
- La figure 1 est une vue latérale schématique illustrant le principe général de montage d'un train arrière par rapport à la caisse d'un véhicule automobile ;
- la figure 2 est une vue selon la flèche A de la figure 1 ;
- la figure 3 est une vue en coupe selon la ligne 3-3 de la figure 4, d'une liaison élastique réalisée conformément aux enseignements de l'invention ;
- la figure 4 est une demi-vue de dessus et une demi-vue en coupe selon la ligne 4-4 de la figure 3 ;
- la figure 5 est une demi-vue latérale de droite et une demi-vue en coupe selon la ligne 5-5 de la figure 3 ;
- la figure 6 est une vue en coupe, similaire à celle de la figure 3, d'un second mode de réalisation d'une liaison élastique ;
- la figure 7 est une vue similaire à celle de la figure 6 d'un troisième mode de réalisation d'une liaison élastique conforme aux enseignements de l'invention ;
- la figure 8 est une vue similaire à celle de la figure 3 d'un quatrième mode de réalisation d'une liaison élastique sans chambre étanche déformable ;
- la figure 9 est une vue d'un détail d'un mode de réalisation simplifié de la liaison représentée à la figure 8 ;
- la figure 10 et une vue similaire à celle de la figure 9 d'une autre variante de réalisation de la liaison élastique ; et
- la figure 11 est une vue similaire à celle de la figure 10 correspondant à une autre position de fonctionnement de la liaison.

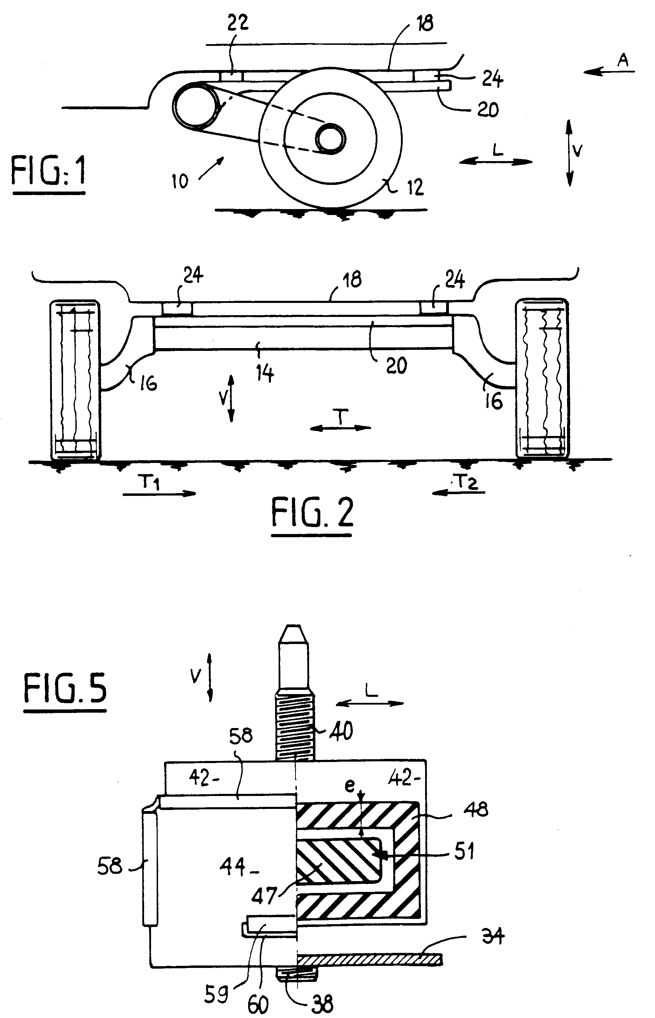

On a représenté aux figures 1 et 2, un train roulant arrière 10 de véhicule automobile comportant notamment des roues 12 reliées à une poutre centrale 14 par des bras latéraux 16. La poutre 14 est reliée à la caisse 18 par une traverse de train arrière avec interposition de deux articulations élastiques 22 et deux liaisons élastiques 24.

Chaque liaison élastique 24 est soumise à des efforts selon trois directions principales, c'est-à-dire selon la direction verticale V, la direction longitudinale L et la direction transversale T.

Les efforts appliqués selon la direction transversale T correspondent à un déplacement relatif du train roulant 10 par rapport à la caisse 18 du véhicule selon une direction sensiblement parallèle à la direction T, ce déplacement pouvant s'effectuer selon deux sens opposés T1 et T2.

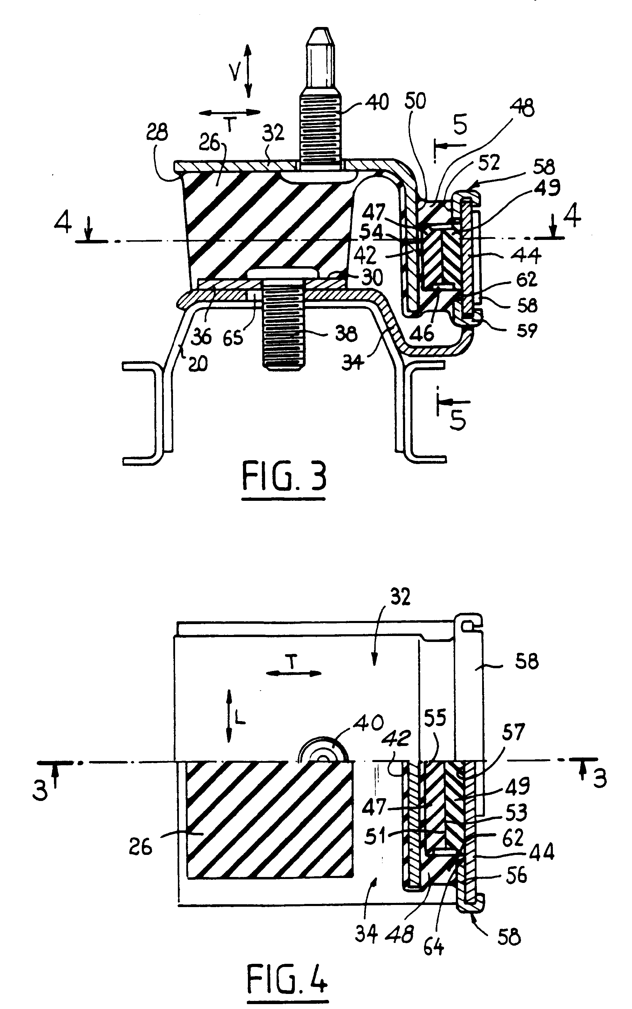

On décrira maintenant en détail un premier mode de réalisation d'une liaison élastique 24 tel qu'il est illustré aux figures 3 à 5.

D'une manière connue la liaison élastique comprend un bloc en matériau élastomère 26 s'étendant sensiblement selon la direction verticale V dont les faces opposées 28 et 30 sont reliées, par adhérisation, à deux armatures principales opposées 32 et 34.

La face inférieure 30 du bloc 26 est reliée à l'armature principale inférieure 34 au moyen d'une armature intermédiaire plane 36 à laquelle il est adhérisé, cette dernière étant reliée à l'armature principale 34 proprement dite par serrage réciproque au moyen d'une vis de montage de la liaison 38 dont la tête est noyée dans le bloc 26 et qui traverse les armatures 36 et 34 pour permettre le montage de la liaison élastique sur une partie de traverse 20.

Les deux armatures principales opposées 32 et 34 sont des armatures métalliques planes parallèles s'étendant dans des plans perpendiculaires à la direction verticale V.

La liaison comporte également une seconde vis de montage 40 qui traverse l'armature principale supérieure 32 et s'étend selon la direction verticale dans le sens opposé à la vis 38 pour permettre la fixation de la liaison élastique sur la caisse 18 du véhicule.

L'armature principale supérieure 32 comporte une portion latérale plane 42 repliée à 90° qui s'étend dans un plan perpendiculaire à la direction transversale T en direction de l'armature inférieure 34. D'une manière symétrique l'armature inférieure 34 comporte une portion latérale plane 44 repliée à 90° qui s'étend parallèlement à la portion 42 en vis-à-vis de cette dernière.

Les deux portions d'armatures 42 et 44 définissent entre elles un espace dans lequel est agencée une chambre étanche déformable 46 dans laquelle sont disposés deux pavés de butée 47 et 49.

La chambre 46 est délimitée latéralement par une paroi latérale tubulaire cylindrique 48 dont la génératrice est parallèle à la direction transversale T. Du fait de son épaisseur "e", la paroi latérale tubulaire 48 possède deux faces annulaires d'extrémités opposées 50 et 52 dont chacune est reliée de manière étanche à une portion d'armatures, 42 et 44 respectivement.

La face d'extrémité 50 est complétée par une paroi mince d'extrémité 54 venue de matière avec la paroi latérale 48 qui est adhérisée sur la face en vis-à-vis de la portion d'armature 42.

La face d'extrémité annulaire 52 est reliée par adhérisation sur la face en vis-à-vis d'un cadre intermédiaire métallique 56.

Le cadre intermédiaire 56 est muni sur trois de ses côtés, d'un bord périphérique 58 qui est rabattu par sertissage sur le pourtour rectangulaire correspondant de la portion d'armature 44.

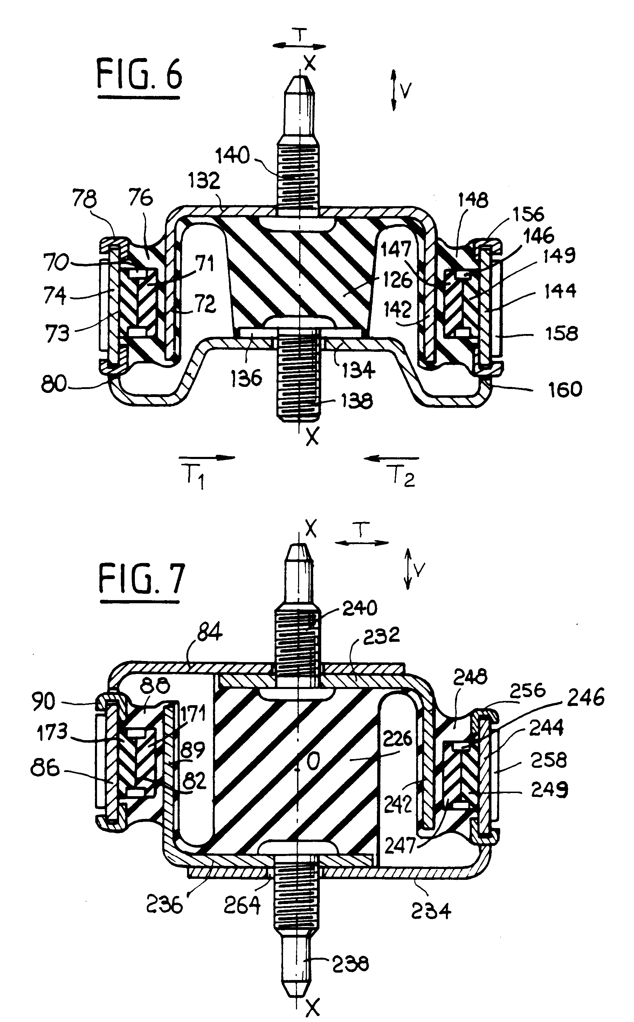

Le quatrième côté du cadre intermédiaire 56, c'est-à-dire le côté inférieur en considérant les figures 3 et 5, comporte également un bord périphérique 59 de longueur réduite, qui s'étend à travers une fente de montage 60 de la portion d'armature 44 et dont le bord libre est rabattu par sertissage sur la face en vis-à-vis de celle-ci.

Comme on peut le constater notamment aux figures 3 et 4, la paroi latérale tubulaire 48 comporte un bourrelet interne d'étanchéité 62, venu de matière avec la paroi latérale 48 au voisinage de sa face d'extrémité annulaire 52, qui coopère avec le bord interne 64 du cadre intermédiaire 56 et la face en vis-à-vis de la portion d'armature 44 pour assurer une liaison étanche entre le cadre 56 et la portion d'armature 44. On a ainsi délimité la chambre 46 qui reçoit les deux pavés de butée 47 et 49 et un agent de lubrification.

Les deux pavés 47 et 49 présentent sensiblement chacun la forme d'un parallépipède rectangle et sont en contact mutuel par une face plane libre de glissement, respectivement 51 et 53, qui s'étend parallèlement au plaie commun des portions d'armatures 42 et 44. Ces faces de glissement 51 et 53 qui sont en butée l'une contre l'autre sont les faces rectangulaires de plus grandes dimensions des pavés, leurs faces opposées 55 et 57 étant reliées à la portion d'armature en vis-à-vis correspondante 42, 44.

Les pavés 47 et 49 peuvent être respectivement libres, collés, surmoulés ou encastrés de manière à coopérer avec la portion d'armature correspondante. Dans la position de repos représentée aux figures les blocs ou pavés 47 et 49 peuvent être montés précontraints entre les portions d'armatures 42 et 44 et la paroi mince en élastomère 54. Cette précontrainte de la paroi en élastomère permet de rattraper éventuellement les jeux apparaissant du fait de l'usure des pavés lors du glissement réciproque des surfaces 51 et 53.

Les pavés peuvent par exemple être réalisés dans un matériau possédant de bonnes caractéristiques de glissement tel que du polyacétal ou un polyamide. Le matériau doit par contre posséder de très bonnes propriétés de résistance à la compression selon la direction correspondant à l'épaisseur des pavés, c'est-à-dire selon la direction T en considérant les figures, de façon à conférer une très grande raideur élastique selon cette direction de déplacement réciproque des armatures 32 et 34. Les faces planes des portions d'armatures 42 et 44 en vis-à-vis des faces planes 55 et 57 des pavés constituent à cet effet des faces planes de butée pour comprimer les pavés.

Comme on peut le constater à la figure 3, le trou 65 formé dans l'armature principale inférieure 34 pour permettre le passage de la vis de montage 38 est un trou oblong qui permet le montage de l'armature inférieure 34 sur la portion de bord périphérique 59 du cadre 56, par inclinaison puis basculement, avant l'opération de sertissage.

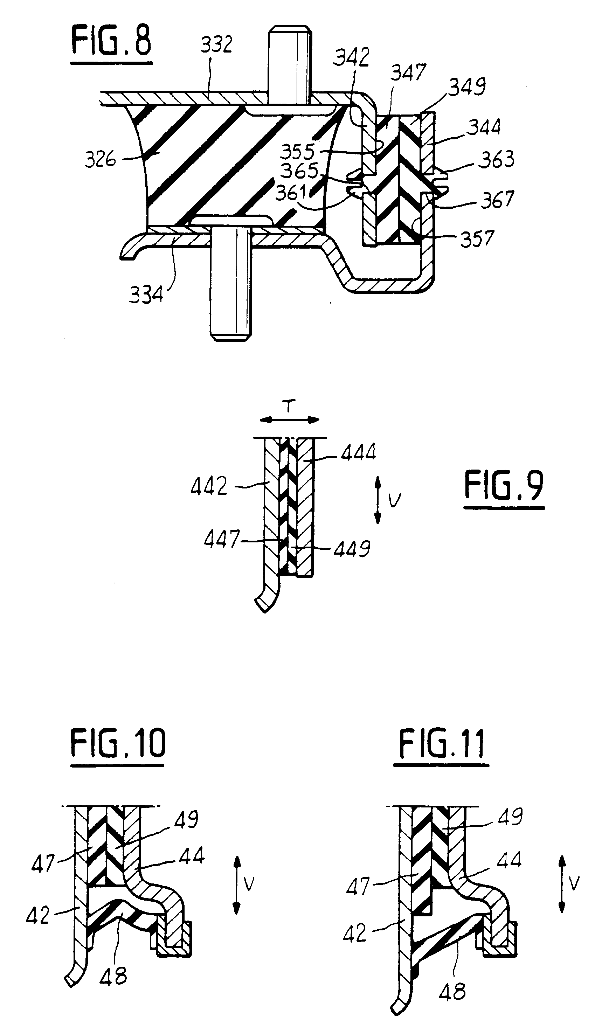

Comme cela est illustré à la variante de réalisation représentée aux figures 10 et 11, la paroi latérale 48 de la chambre étanche 46 peut présenter un profil en forme de soufflet dont la convexité est ici tournée vers l'intérieur de la chambre de façon à permettre un grand débattement selon les directions verticale et longitudinale correspondant au glissement des surfaces en vis-à-vis des deux pavés 47 et 49, la paroi latérale 48 étant tendue dans la position de débattement maximal selon la direction V (Figures 10 et 11).

Pour assurer un remplissage complet de la chambre 46, l'opération d'assemblage de la liaison élastique, c est-à-dire l'opération de sertissage du bord du cadre 56, est de préférence réalisée en immersion dans un bain de lubrifiant pour remplir la chambre 46.

Le bloc en matériau élastomère 26 et la paroi latérale 48 peuvent être réalisés par surmoulage sur l'armature supérieure principale 32 en une seule opération. La liaison qui vient d'être décrite possède une raideur élastique transversale qui peut être sensiblement égale à 50 fois la raideur élastique de la liaison suivant la direction verticale V qui n'est due qu'à la seule présence du bloc en matériau élastomère 26.

On comprend en effet aisément que dans le cas où les deux armatures principales 32 et 34 sont sollicitées, soit selon la direction verticale V, soit selon la direction longitudinale L, les blocs ou pavés de butée 47 et 49 coulissent l'un par rapport à l'autre et n'ont aucun effet amplificateur sur la rigidité élastique de la liaison selon ces deux directions.

On décrira maintenant la variante de réalisation de la liaison élastique représentée à la figure 6. Les éléments identiques ou similaires à ceux de la liaison des figures 3 à 5 sont désignés par les mêmes chiffres de référence augmentés de cent.

La liaison élastique de la figure 6 comporte deux chambres 146 et 70 agencées symétriquement de part et d'autre de l'axe général X-X de la liaison élastique commune aux deux vis de fixation 138 et 140.

A cet effet la seconde chambre étanche 70 reçoit deux pavés de butée et de glissement 71 et 73 qui sont en tous points identiques aux pavés 147 et 149 reçus dans la première chambre 146.

La seconde chambre 70 s'étend entre une seconde portion d'armature 72 de l'armature principale supérieure 132 et une seconde portion d'armature 74 de l'armature principale inférieure 134.

Les secondes portions d'armatures 72 et 74 sont symétriques des portions d'armatures 142 et 144 et s'étendent dans des plans parallèles à celles-ci et opposés par rapport à l'axe X-X.

La paroi latérale 76 de la seconde chambre est également reliée à la portion d'armature 74 au moyen d'un cadre intermédiaire 78.

Les deux prolongements 142 et 72 de l'armature principale 132 s'étendent parallèlement vers le bas entre les deux prolongements 144 et 74 de l'armature principale inférieure 134.

Afin de réaliser l'assemblage de la liaison élastique de la figure 6 il est nécessaire de comprimer légèrement les deux cadres intermédiaires 156 et 78 respectivement dans les directions T2 et T1 afin de permettre leur introduction entre les deux portions d'armatures extérieures 144 et 74 jusqu'à ce que les bords inférieurs des cadres 156 et 78 pénètrent dans les fentes 160 et 80. Il ne reste plus ensuite qu'à procéder au sertissage des deux cadres.

Du fait de sa symétrie de conception par rapport à l'axe X-X, la liaison élastique de la figure 6 présente une raideur élastique égale suivant la direction T quel que soit le sens de déplacement relatif des deux armatures principales 132 et 134.

Le montage d'un train roulant de véhicule à l'aide de deux liaisons élastiques du type de celles représentées à la figure 6 permet d'accroître encore le guidage du train roulant.

On décrira maintenant une seconde variante de réalisation de la liaison élastique selon l'invention représentée à la figure 7. Les éléments identiques ou similaires à ceux de la figure 1 y sont désignés par les mêmes chiffres de référence augmentés de 200.

La liaison élastique représentée à la figure 7 comporte une symétrie de structure par rapport au centre O du bloc élastomère 226 situé sur l'axe X-X commun aux vis de montage 238 et 240.

L'armature supérieure principale 232 est complétée par une seconde armature supérieure principale 84 qui se prolonge par une portion d'armature 86 repliée à 90°.

De la même manière l'armature intermédiaire 236 se prolonge par une portion d'armature 89 repliée à 90° parallèle à la portion d'armature 86, ces deux dernières portions étant également parallèles aux portions d'armatures 242 et 244. La paroi latérale 88 délimitant la seconde chambre 82 est reliée de manière étanche au prolongement d'armature 86 par un cadre intermédiaire 90. Comme dans le cas de la figure 6, la seconde chambre étanche 82 reçoit deux pavés de butée et de glissement 171 et 173 qui sont en tous points identiques aux pavés 247 et 249 agencés dans la chambre étanche 246.

L'assemblage de cette liaison élastique se fait en comprimant légèrement les deux cadres 256 et 90 en direction de l'axe X-X afin qu'ils viennent s'insérer entre les portions d'armatures en vis-à-vis 244 et 86.

Les deux paires de pavés 247, 249 et 171, 173 sont disposées entre les deux paires de prolongements alternés 244, 242 et 89, 86 (de la droite vers la gauche en considérant la figure 7), de manière à obtenir une rigidité élastique maximale de la liaison élastique selon la direction T.

Comme on peut le constater aux figures 6 et 7, les parois latérales des chambres étanches peuvent être venues de matière avec le bloc central en matériau élastomère et réalisées en une seule opération de surmoulage.

Dans le cas de la figure 7 l'armature principale supérieure complémentaire 84 et l'armature principale inférieure 234 sont solidarisées respectivement avec l'armature principale supérieure 232 et avec l'armature intermédiaire 236 lors du montage de la liaison sur le véhicule et par serrage des vis 238 et 240.

On a représenté à la figure 8 un mode de réalisation simplifié de la liaison de la figure 3, les mêmes chiffres de référence augmentés de 300 étant utilisés pour les éléments identiques ou similaires. Dans ce mode de réalisation il n'y a pas de chambre étanche autour des pavés 347 et 349 qui sont directement fixés aux portions d'armatures 342 et 344 par exemple par des harpons élastiques déformables 361 et 363 venus de matière avec les pavés et qui s'étendent depuis les faces 355 et 357 des pavés pour être reçus dans des orifices 365 et 367 formés respectivement dans les portions d'armatures 342 et 344.

Dans une autre variante de réalisation dont un détail est représenté à la figure 9, les pavés de matière plastique 447 et 449 sont réalisés sous la forme de films épais collés sur les portions d'armatures 442 et 444. Le matériau des pavés pourrait également être directement moulé sur ces portions d'armatures.

## Revendications

1. Liaison élastique (24) du type comportant un bloc (26, 126, 226, 326) en matériau élastomère auquel sont reliées deux armatures (32,132, 232 - 34,134,234 - 332, 334) susceptibles de se déplacer l'une par rapport à l'autre, et du type dans lequel chacune des deux armatures comporte une portion d'armature (42,44 - 142, 144 - 242,244 - 342,344) qui s'étend parallèlement à un plan commun, au moins un pavé de butée (47,49 - 147,149 - 247,249 - 347,349 - 447,449) étant agencé entre ces deux portions d'armatures de manière à travailler en compression pour augmenter la raideur élastique de la liaison selon une direction (T) de déplacement perpendiculaire audit plan commun, et dans lequel une face plane (51, 53) du pavé de butée coopère par glissement avec une face plane de butée et de glissement agencée en vis-à-vis (53, 51) et parallèle audit plan commun, caractérisée en ce qu'elle comporte deux pavés (47, 49) de butée dont chacun est relié à l'une des deux portions d'armatures et comporte une face plane libre de glissement (51, 53) parallèle audit plan commun et qui coopère par glissement avec la face libre de glissement (53, 51) de l'autre pavé.

2. Liaison élastique selon la revendication 1, caractérisée en ce que chaque pavé de butée (47, 49) présente une forme sensiblement parallélépipédique rectangle dont l'une des faces rectangulaires de plus grandes dimensions (51, 53) constitue ladite face plane libre de glissement et dont la face rectangulaire opposée (56, 57) est reliée à la portion d'armature en vis-à-vis (42, 44).

3. Liaison élastique selon l'une quelconque des revendications précédentes, caractérisée en ce qu'elle comporte au moins une chambre étanche déformable (46) agencée entre lesdites deux portions d'armatures (42, 44) et dans laquelle sont agencés les pavés de butée (47, 49).

4. Liaison élastique selon la revendication 3, caractérisée en ce que la chambre est délimitée par une paroi latérale tubulaire (48, 148, 248) en matériau élastomère dont chacune des faces d'extrémités annulaires opposées (50, 52) est reliée de manière étanche à la face de la portion d'armature (42, 44) en vis-à-vis.

5. Liaison élastique selon la revendication 4, caractérisée en ce que la paroi tubulaire est une paroi sensiblement cylindrique dont la génératrice est parallèle à ladite direction de déplacement (T).

6. Liaison élastique selon la revendication 4, caractérisée en ce que la courbe directrice de ladite paroi latérale (48,148,248) est un rectangle.

7. Liaison élastique selon l'une quelconque des revendications 4 à 6, caractérisée en ce que la chambre (46) est également délimitée par une paroi d'extrémité (54), venue de matière avec la paroi latérale (48), et adhérisée sur la face de la portion d'armature (42) en vis-à-vis.

8. Liaison élastique selon l'une quelconque des revendications 4 à 6, caractérisée en ce que l'une (52) desdites faces d'extrémité annulaires est adhérisée sur un cadre intermédiaire (56) de liaison dont le contour correspond sensiblement à celui de ladite face d'extrémité annulaire et qui comporte des moyens de liaison étanches (58) avec la portion d'armature (44) en vis-à-vis.

9. Liaison élastique selon la revendication 8, caractérisée en ce que lesdits moyens de liaison étanche sont constitués par un bord périphérique (58) du cadre intermédiaire (56) serti autour de ladite portion d'armature (44).

10. Liaison élastique selon la revendication 9, caractérisée en ce que lesdits moyens de liaison étanche comportent également un bourrelet interne (62) d'étanchéité, venu de matière avec la paroi latérale (48) au voisinage de ladite face d'extrémité annulaire (52), et qui coopère avec le bord interne du cadre intermédiaire et la face en vis-à-vis de la portion d'armature.

11. Liaison élastique selon l'une quelconque des revendications 4 à 10, caractérisée en ce que la paroi latérale (48) présente, en section par un plan parallèle à ladite direction de déplacement (T), un profil en forme de soufflet.

12. Liaison élastique selon l'une quelconque des revendications précédentes, caractérisée en ce que lesdites armatures (32, 34) sont deux armatures planes opposées et parallèles qui sont séparées axialement par un bloc en matériau élastomère (26) dont chacune des faces opposées (28, 30) est adhérisée à l'armature en vis-à-vis, et en ce que lesdites portions d'armature (42, 44) sont repliées à 90° en direction de l'armature opposée (34, 32).

13. Liaison élastique selon l'une quelconque des revendications 3 à 12, caractérisée en ce que chacune des deux armatures comporte une autre portion d'armature qui s'étend parallèlement audit plan commun, au moins un autre pavé de butée (71,73 - 171,173) étant agencé entre ces deux autres portions d'armature de manière à travailler en compression pour augmenter la raideur élastique de la liaison selon une direction (T) de déplacement perpendiculaire audit plan commun.

14. Liaison élastique selon la revendication 13, caractérisée en ce qu'elle comporte une seconde chambre étanche déformable (146, 246) agencés entre lesdites deux autres portions d'armatures et dans laquelle est agencé au moins un autre pavé de butée (71,73 - 171,173).

15. Liaison élastique selon l'une des revendications 13 ou 14, caractérisée en ce que les deux portions parallèles (142, 72) d'une des deux armatures (32) s'étendent entre les deux portions parallèles (144, 74) de l'autre des deux armatures (34) de manière à augmenter la rigidité de la liaison selon ladite direction de déplacement relatif dans les deux sens de déplacement (T1, T2).

16. Liaison élastique selon l'une des revendications 13 ou 14, caractérisée en ce que les deux portions parallèles (242, 86) d'une des deux armatures (234, 84) sont agencées de manière alternée par rapport aux deux portions parallèles (244, 89) de l'autre (232, 236) des deux armatures de manière à augmenter la rigidité de la liaison selon ladite direction (T) de déplacement relatif dans un sens de déplacement.

17. Liaison élastique selon l'une quelconque des revendications 1 à 3, caractérisée en ce que chaque pavé de butée (347, 349) est fixé à la portion d'armature correspondante (342, 344) au moyen d'un harpon élastique (361, 363) venu de matière avec le pavé et reçu dans un orifice (365, 367) formé dans la portion d'armature.

18. Liaison élastique selon l'une quelconque des revendications 1 à 3, caractérisée en ce que chaque pavé est un pavé en matière plastique (447, 449) réalisé sous la forme d'un film épais collé ou moulé sur la portion d'armature correspondante (442, 444).

## Patentansprüche

1. Elastische Verbindung (24) des Typs mit einem Block (26, 126, 226, 326) aus elastomerem Material, mit dem zwei Beschläge (32, 132, 232, - 34, 134, 234 - 332, 334) verbunden sind, die relativ zueinander verschiebbar sind, und des Typs, bei dem jeder der beiden Beschläge einen Beschlagteil (42, 44 - 142, 144 -242, 244 - 342, 344) aufweist, der sich parallel zu einer gemeinsamen Ebene erstreckt, wobei wenigstens ein Anschlagblock (47, 49 - 147, 149 - 247, 249 - 347, 349 -447, 449) zwischen den beiden Beschlagteilen derart angebracht ist, daß er unter Druck eine Erhöhung der elastischen Steifigkeit der Verbindung in einer zur gemeinsamen Ebene senkrechten Verschiebungsrichtung (T) bewirkt, und bei dem eine ebene Fläche (51, 53) des Anschlagblocks gleitend mit einer ebenen Anschlag- und Gleitfläche (53, 51) zusammenwirkt, die gegenüberliegend und parallel zur gemeinsamen Ebene vorgesehen ist, dadurch gekennzeichnet, daß sie zwei Anschlagblöcke (47, 49) aufweist, von denen jeder mit einem der beiden Beschlagteile verbunden ist und eine freie ebene Gleitfläche (51, 53) aufweist, die zur gemeinsamen Ebene parallel ist und die mit der freien Gleitfläche (53, 51) des anderen Blocks zusammenwirkt.

2. Elastische Verbindung nach Anspruch 1, dadurch gekennzeichnet, daß jeder Anschlagblock (47, 49) im wesentlichen die Form eines parallelepipedischen Rechtecks aufweist, dessen eine rechteckige Fläche mit der größten Abmessung (51, 53) die freie ebene Gleitfläche bildet und dessen entgegengesetzte rechteckige Fläche (56, 57) mit dem gegenüberliegenden Beschlagteil (42, 44) verbunden ist.

3. Elastische Verbindung nach einem der vorhergehenden Ansprüche, dadurch gekennzeichnet, daß sie wenigstens eine deformierbare dichte Kammer (46) aufweist, die zwischen den beiden Beschlagteilen (42, 44) vorgesehen ist und in der die Anschlagblöcke (47, 49) vorgesehen sind.

4. Elastische Verbindung nach Anspruch 3, dadurch gekennzeichnet, daß die Kammer von einer rohrförmigen Seitenwand (48, 148, 248) aus elastomerem Material begrenzt ist, deren entgegengesetzte ringförmige Endflächen (50, 52) jeweils dicht mit der Fläche des gegenüberliegenden Beschlagbereichs (42, 44) verbunden ist.

5. Elastische Verbindung nach Anspruch 4, dadurch gekennzeichnet, daß die rohrförmige Wand eine im wesentlichen zylindrische Wand ist, deren Mantellinie parallel zur Verschiebungsrichtung (T) verläuft.

6. Elastische Verbindung nach Anspruch 4, dadurch gekennzeichnet, daß die Leitkrümmung der Seitenwand (48, 148, 248) ein Rechteck ist.

7. Elastische Verbindung nach einem der Ansprüche 4 bis 6, dadurch gekennzeichnet, daß die Kammer (46) ferner durch eine Endwand (54) begrenzt ist, die mit der Seitenwand (48) aus einem Material gebildet ist und haftend an der Fläche des gegenüberliegenden Beschlagteils (42) angebracht ist.

8. Elastische Verbindung nach einem der Ansprüche 4 bis 6, dadurch gekennzeichnet, daß eine (52) der ringförmigen Endflächen haftend an einen Zwischen-Verbindungsrahmen (56) angebracht ist, dessen Kontur im wesentlichen derjenigen der ringförmigen Endfläche entspricht und der Einrichtungen zum dichten Verbinden (58) mit dem gegenüberliegenden Beschlagteil (44) aufweist.

9. Elastische Verbindung nach Anspruch 8, dadurch gekennzeichnet, daß die Einrichtungen zum dichten Verbinden durch einen um den Beschlagteil (44) gebördelten Umfangsrand (58) des Zwischenrahmens (56) gebildet ist.

10. Elastische Verbindung nach Anspruch 9, dadurch gekennzeichnet, daß die Einrichtungen zum dichten Verbinden ferner einen inneren Dichtungswulst (62) aufweisen, der in der Nähe ringförmigen Endfläche (52) mit der Seitenwand (48) aus einem Material gebildet ist und der mit dem Innenrand des Zwischenrahmens und der gegenüberliegenden Fläche des Beschlagteils zusammenwirkt.

11. Elastische Verbindung nach einem der Ansprüche 4 bis 10, dadurch gekennzeichnet, daß die Seitenwand (48), im Schnitt entlang einer zur Verschiebungsrichtung (T) parallelen Ebene, ein Profil in Form eines Blasebalgs aufweist.

12. Elastische Verbindung nach einem der vorhergehenden Ansprüche, dadurch gekennzeichnet, daß die Beschläge (32, 34) zwei einander gegenüberliegende und parallele ebene Beschläge sind, die axial durch einen Block aus Elastomermaterial (26) getrennt sind, dessen entgegengesetzte Flächen (28, 30) jeweils haftend an dem gegenüberliegenden Beschlag angebracht sind, und daß die Beschlagteile (42, 44) um 90° in Richtung des entgegengesetzten Beschlags (34, 32) umgebogen sind.

13. Elastische Verbindung nach einem der Ansprüche 3 bis 12, dadurch gekennzeichnet, daß jeder der beiden Beschläge einen weiteren Beschlagteil, der sich parallel zur gemeinsamen Ebene erstreckt, und wenigstens einen weiteren Anschlagblock (71, 73 - 171, 173) aufweist, der zwischen den beiden weiteren Beschlagteilen derart vorgesehen ist, daß er unter Druck eine Erhöhung der elastischen Steifigkeit der Verbindung in einer zur gemeinsamen Ebene senkrechten Verschiebungsrichtung (T) bewirkt.

14. Elastische Verbindung nach Anspruch 13, dadurch gekennzeichnet, daß sie eine zweite deformierbare dichte Kammer (146, 246) aufweist, die zwischen den beiden weiteren Beschlagteilen vorgesehen ist und in der wenigstens ein weiterer Anschlagblock (71, 73 - 171, 173) vorgesehen ist.

15. Elastische Verbindung nach Anspruch 13 oder 14, dadurch gekennzeichnet, daß die beiden parallelen Teile (142, 72) eines des beiden Beschläge (32) sich zwischen den beiden parallelen Teilen (144, 74) des anderen der beiden Beschläge (34) derart erstrecken, daß die Steifigkeit der Verbindung in der Richtung der relativen Verschiebung in beiden Verschiebungsrichtungen (T1, T2) erhöht ist.

16. Elastische Verbindung nach Anspruch 13 oder 14, dadurch gekennzeichnet, daß die beiden parallelen Teile (242, 86) eines der beiden Beschläge (234, 84) in bezug auf die beiden parallelen Teile (244, 89) des anderen (232, 236) der beiden Beschläge abwechselnd angeordnet sind, derart, daß die Steifigkeit der Verbindung in der Richtung der relativen Verschiebung (T) in einer Verschiebungsrichtung erhöht ist.

17. Elastische Verbindung nach einem der Ansprüche 1 bis 3, dadurch gekennzeichnet, daß jeder Anschlagblock (347, 349) an dem entsprechenden Beschlagteil (342, 344) durch einen elastischen Gabelanker (361, 363) befestigt ist, der mit dem Block aus einem Material gebildet und in einer in dem Beschlagteil ausgebildeten Öffnung (365, 367) aufgenommen ist.

18. Elastische Verbindung nach einem der Ansprüche 1 bis 3, dadurch gekennzeichnet, daß jeder Block ein Block (447, 449) aus Kunststoffmaterial ist, der in Form eines auf den entsprechenden Beschlagteil (442, 444) aufgeklebten oder angegossenen dicken Films ausgebildet ist.

## Claims

1. Elastic connection (24) of the type comprising a block (26, 126, 226, 326) in elastomeric material to which two armatures are connected (32, 123, 232 - 34, 134, 234 - 332, 334) which are capable of moving in relation to one another and of the type in which each of the two armatures comprises an armature portion (42, 44 - 142, 144, 242, 244 - 342, 344) which extends in parallel to a common plane, at least one thrust block (47, 49 - 147, 149 - 247, 249 - 347, 349 - 447, 449) being fitted between these two armature portions so as to work by compression to increase the elastic stiffness of the connection according to a displacement direction (T) perpendicular to the said common plane, and in which a plane face (51, 52) of the thrust block works by sliding with a thrust and sliding plane face opposite to and parallel with the said common plane characterised in that it comprises two thrust blocks (47, 49) each of which is linked to one of the two armature portions and comprises a free plane face for sliding (51, 53) parallel to the common plane and which works by sliding with the free sliding face (53, 51) of the other block.

2. Elastic connection according to claim 1 characterised in that each thrust block (47, 49) presents a form which is approximately a parallelepipedic rectangle one of whose rectangular faces with larger dimensions (51, 53) constitutes the said free sliding plane face and whose opposite rectangular face (56, 57) is linked to the opposite armature portion (42, 44).

3. Elastic connection according to any of the preceding claims in that it comprises at least one sealed chamber which can be distorted (46) and which is fitted between the said two armature portions (42, 44) and in which the thrust blocks are fitted. (47, 49).

4. Elastic connection according to claim 3 in that the chamber is marked out by a tubular lateral casing (48, 148, 248) in elastomeric material one of whose opposite annular extreme faces is linked in a sealed manner to the face of the opposite armature portion (42, 44).

5. Elastic connection according to claim 4 in that the tubular casing is a casing which is approximately cylindrical the generator of which is parallel to the said displacement direction (T).

6. Elastic connection according to claim 4 in that the driving curve of the said lateral casing (48, 148, 248) is a rectangle.

7. Elastic connection according to any of claims 4 to 6 in that the chamber (46) is also marked out by an extremely casing (54) in the material of the lateral casing (48) and attached to the face of the opposite armature portion.

8. Elastic connection according to any of claims 4 to 6 in that one (52) of the said annular extremely faces is attached to an intermediary connection framework (56) the contour of which corresponds approximately to that of the said annular extremity face and which comprises sealed connection means (58) with the opposite armature portion (44).

9. Elastic connection according to claim 8 in that the said means of sealed connections are made from a peripheral side (58) of the intermediary framework (56) crimped around the said armature portion (44).

10. Elastic connection according to claim 9, in that the said means of sealed connection also comprise an internal sealing rim (62) in one piece with the lateral casing (48) in proximity to the said annular extremity face (52) and which works with the internal side of the intermediary framework and the opposite face to the armature portion.

11. Elastic connection according to any of claims 4 to 10, in that the lateral casing (48) presents a section on a plane which is parallel to the displacement direction (T) in the form of bellows.

12. Elastic connection according to any of the preceding claims in that the said armatures (32, 34) are two opposite and parallel plane armatures which are separated axially by a block in elastomeric material (26) each of whose opposite faces (28, 30) are attached to the opposite armature, and in that the said armature portions (42, 44) are folded in 90° in the direction of the opposite armature (34, 32).

13. Elastic connection according to any of claims 3 to 12 in that each of the two armatures comprise another armature portion which extends in parallel to the common plane, at least one other thrust block (71, 73 - 171, 173) being fitted between these two other armature portions so as to work by compression to increase the elastic stiffness of the connection according to the displacement direction (T) which is perpendicular to the said common plane.

14. Elastic connection according to claim 13 in that it comprises a second sealed chamber which can be distorted (146, 246) and which is fitted between the said two other armature portions and in which is fitted at least one other thrust block (71, 73 - 171, 173).

15. Elastic connection according to one of claims 13 or 14 in that the two parallel portions (142, 72) of one of the two armatures (32) extend between the two parallel portions (144, 74) of the other of the two armatures (34) so as to increase the rigidity of the connection according to the said relative displacement direction in the two displacement senses (T1, T2).

16. Elastic connection according to one of claims 13 or 14 in that the two parallel portions (242, 86) of one of the two armatures (234, 84) are fitted in an alternated manner in relation to the two parallel portions (244, 89) of the other (232, 236) of the two armatures so as to increase the rigidity of the connection according to the said relative displacement direction (T) in one displacement sense.

17. Elastic connection according to any of claims 1 to 3 in that each thrust block (347, 349) is fixed to the corresponding armature portion (342, 349) by means of an elastic hook (361, 363) in one piece with the block and received in an orifice (365, 367) formed in the armature portion.

18. Electric connection according to any of claims 1 to 3 in that each block is a block in plastic (447, 449) produced in the form of a thick film cast or stuck on the corresponding armature portion (442, 444).
